# EUROPEAN PATENT APPLICATION

(11) **EP 4 586 661 A1**
(43) Date of publication of application: **16.07.2025**
(21) Application number: 22961519.0
(22) Date of filing: 07.10.2022
(51) Int. Cl.: H04W 12/04, H04W 12/06, H04W 12/69, H04W 60/00, H04L 9/08, H04L 9/30

(54) **METHOD AND DEVICE FOR SUPPORTING USER PRIVACY PROTECTION IN WIRELESS COMMUNICATION SYSTEM**

(71) Applicant: Samsung Electronics Co., Ltd., Suwon-si, Gyeonggi-do 16677 (KR); Korea Advanced Institute of Science and Technology, Daejeon 34141 (KR)
(72) Inventor: JE, Donghyun, Suwon-si, Gyeonggi-do, 16677 (KR); KIM, Yongdae, Suwon-si, Gyeonggi-do, 16677 (KR); YUN, Insu, Suwon-si, Gyeonggi-do, 16677 (KR); BAE, Sangwook, Suwon-si, Gyeonggi-do, 16677 (KR); SON, Mincheol, Suwon-si, Gyeonggi-do, 16677 (KR); AHN, Junho, Suwon-si, Gyeonggi-do, 16677 (KR); OH, Beomseok, Suwon-si, Gyeonggi-do, 16677 (KR); LEE, Jiho, Suwon-si, Gyeonggi-do, 16677 (KR); HWANG, Yeongbin, Suwon-si, Gyeonggi-do, 16677 (KR)
(74) Representative: Gulde & Partner
(86) International application number: PCT/KR2022/015137
(87) International publication number: WO 2024/075874

(57) **Abstract**

The present disclosure relates to a method and apparatus for supporting protection of a user's privacy in a wireless communication system. An operating method of a home network (HN) in a wireless communication system may include receiving, from a serving network (SN), a registration request message including a subscription concealed identifier (SUCI), in response to a registration request of a user equipment, obtaining a first key, based on the SUCI, and transmitting the first key to the SN.

## Description

### Technical Field

The present disclosure relates to a method and apparatus for supporting protection of a user's privacy in a wireless communication system.

### Background Art

Considering the development of wireless communication from generation to generation, technologies have been developed mainly for services targeting humans, such as voice calls, multimedia services, data services, and the like. Following the commercialization of 5^{th} generation (5G) communication systems, it is expected that connected devices that have been exponentially growing will be connected to communication networks. Examples of things connected to networks may include vehicles, robots, drones, home appliances, displays, smart sensors installed in various infrastructures, construction machines, factory equipment, and the like. Mobile devices are expected to evolve in various form-factors such as augmented reality glasses, virtual reality headsets, hologram devices, and the like. In order to provide various services by connecting hundreds of billions of devices and things in the 6^{th} generation (6G) era, there have been ongoing efforts to develop enhanced 6G communication systems. For these reasons, 6G communication systems are referred to as beyond-5G systems.

6G communication systems, which are expected to be commercialized around 2030, will have a peak data rate of tera (i.e., 1,000 giga)-level bps and radio latency less than 100 µsec. That is, the 6G communication systems will be 50 times as fast as 5G communication systems and have one tenth the radio latency of 5G.

In order to achieve such a high data rate and ultra-low latency, it has been considered to implement the 6G communication systems in a terahertz band (for example, 95 GHz to 3 THz bands). It is expected that, due to more severe path loss and atmospheric absorption in the terahertz bands than those in mmWave bands introduced in 5G, technologies capable of securing the signal transmission distance, that is, coverage, will become more important. It is necessary to develop, as major technologies for securing the coverage, radio frequency (RF) elements, antennas, novel waveforms having better coverage than orthogonal frequency division multiplexing (OFDM), beamforming and massive multiple input multiple output (MIMO), full dimensional MIMO (FD-MIMO), array antennas, and multiantenna transmission technologies such as large-scale antennas. In addition, in order to improve the coverage of terahertz-band signals, there has been ongoing discussion about new technologies such as metamaterial-based lenses and antennas, a high-dimensional spatial multiplexing technology using orbital angular momentum (OAM), reconfigurable intelligent surface (RIS), and the like.

Moreover, in order to improve spectral efficiency and overall network performance, the following technologies have been developed for 6G communication systems: a full-duplex technology for enabling an uplink transmission and a downlink transmission to simultaneously use the same frequency resource at the same time; a network technology for using satellites, high-altitude platform stations (HAPS), and the like in an integrated manner; an improved network structure for supporting mobile base stations and the like and enabling network operation optimization and automation and the like; a dynamic spectrum sharing technology via collision avoidance based on a prediction of spectrum usage; use of artificial intelligence (AI) in wireless communication for improvement of overall network operation by using Al in a designing phase for developing 6G and internalizing end-to-end Al support functions; and a next-generation distributed computing technology for overcoming the limit of UE computing ability through reachable super-high-performance communication and computing resources (such as mobile edge computing (MEC), clouds, and the like) over the network. In addition, through designing new protocols to be used in the 6G communication systems, developing mechanisms for implementing a hardware-based security environment and safe use of data, and developing technologies for maintaining privacy, attempts to strengthen the connectivity between devices, optimize the network, promote softwarization of network entities, and increase the openness of wireless communications are continuing.

It is expected that research and development of the 6G communication systems in hyper-connectivity, including person to machine (P2M) as well as machine to machine (M2M), will facilitate the next hyper-connected experience. In more detail, it is expected that services such as truly immersive extended reality (XR), high-fidelity mobile hologram, and digital replication could be provided through the 6G communication systems. In addition, services such as remote surgery for security and reliability enhancement, industrial automation, and emergency response will be provided through the 6G communication system, such that the technologies could be applied in various fields such as industry, medical care, automobiles, home appliances, and the like.

### Disclosure of Invention

### Technical Problem

When following the authentication and key agreement of the existing standard, there is a risk that a user's privacy is not protected. For example, when a long-term identifier (ID) such as a subscription permanent identifier (SUPI) or a long-term key which is bound to each user exists, a mobile network operator may recognize an identity of a user who is bound to a long-term ID or a long-term key. Also, when a temporary ID is used, the mobile network operator may recognize a long-term ID or a long-term key which is bound to the temporary ID. When an Internet Protocol (IP) and a temporary ID which are allocated to a user are bound, the mobile network operator may obtain information about a service that the user is using or used. When current location information of a user is managed by base station units, the mobile network operator may recognize location information of the user. When user traffic is protected in an interval between a user equipment (UE) and a base station, the mobile network operator may obtain information about traffic of the UE.

The present disclosure relates to a method and apparatus for supporting protection of a user's privacy in a wireless communication system, and provides a process for authentication and key agreement of a UE.

### Solution to Problem

According to an embodiment of the present disclosure, an operating method of a home network (HN) for supporting protection of a user's privacy in a wireless communication system may include receiving, from a serving network (SN), a registration request message including a subscription concealed identifier (SUCI), in response to a registration request of a user equipment (UE), obtaining a first key, based on the SUCI, and transmitting the first key to the SN.

According to an embodiment of the present disclosure, an operating method of a SN for supporting protection of a user's privacy in a wireless communication system may include receiving, from a UE, a registration request message including a SUCI, transmitting, to a HN, the registration request message, receiving, from the HN, a first key obtained based on the SUCI, performing a non-access stratum security mode command (NAS SMC) and a radio resource control security mode command (RRC SMC), generating a global unique temporary identifier (GUTI), and transmitting, to the UE, a registration accept message including the GUTI.

According to an embodiment of the present disclosure, a HN for supporting protection of a user's privacy in a wireless communication system may include a transceiver, and at least one processor connected to the transceiver. The at least one processor may be configured to receive, via the transceiver, from a SN, a registration request message including a SUCI, in response to a registration request of a UE, obtain a first key, based on the SUCI, and transmit, via the transceiver, the first key to the SN.

According to an embodiment of the present disclosure, a SN for supporting protection of a user's privacy in a wireless communication system may include a transceiver, and at least one processor connected to the transceiver. The at least one processor may be configured to receive, via the transceiver, from a UE, a registration request message including a subscription concealed identifier (SUCI), transmit, via the transceiver, to a HN, the registration request message, receive, via the transceiver, from the HN, a first key obtained based on the SUCI, perform a NAS SMC and an RRC SMC, generate a GUTI, and transmit, to a UE, a registration accept message including the GUTI.

### Brief Description of Drawings

FIG. 1 is a diagram for describing a method of supporting protection of a user's privacy in a wireless communication system, according to an embodiment of the present disclosure.
FIG. 2 is a diagram for describing a method of supporting protection of a user's privacy in a wireless communication system, according to an embodiment of the present disclosure.
FIG. 3 is a diagram for describing a method of supporting protection of a user's privacy in a wireless communication system, according to an embodiment of the present disclosure.
FIG. 4 is a diagram for describing an operation of obtaining information about an amount of data usage for each subscription permanent identifier (SUPI) according to an embodiment of the present disclosure.
FIG. 5 is a diagram for describing an operation of obtaining location pattern information according to an embodiment of the present disclosure.
FIG. 6 is a flowchart of a method by which a home network (HN) supports protection of a user's privacy in a wireless communication system according to an embodiment of the present disclosure.
FIG. 7 is a flowchart of a method by which a serving network (SN) supports protection of a user's privacy in a wireless communication system according to an embodiment of the present disclosure.
FIG. 8 is a diagram illustrating a configuration of a HN according to an embodiment of the present disclosure.
FIG. 9 is a diagram illustrating a configuration of a network entity according to an embodiment of the present disclosure.
FIG. 10 is a diagram illustrating a configuration of a user equipment (UE) according to an embodiment of the present disclosure.

### Mode for the Invention

Hereinafter, embodiments of the present disclosure will now be described more fully with reference to the accompanying drawings. In the descriptions of embodiments, certain detailed explanations of the related art which are well known in the art to which the present disclosure belongs and are not directly related to the present disclosure are omitted. By omitting unnecessary explanations, the essence of the present disclosure may not be obscured and may be explicitly conveyed.

For the same reason, some elements in the drawings are exaggerated, omitted, or schematically illustrated. Also, the size of each element does not entirely reflect the actual size. In the drawings, the same or corresponding elements are denoted by the same reference numerals.

It will be understood that each block of flowchart illustrations, and combinations of blocks in the flowchart illustrations, may be implemented by computer program instructions.

In addition, each block of the flowchart illustrations may represent a module, segment, or portion of code, which includes one or more executable instructions for performing specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

In this regard, the term "... unit" as used in the present embodiment refers to a software or hardware component, such as field-programmable gate array (FPGA) or application-specific integrated circuit (ASIC), which performs certain tasks. However, the term "... unit" does not mean to be limited to software or hardware. A "... unit" may be configured to be in an addressable storage medium or configured to operate one or more processors. Thus, according to an embodiment, a "... unit" may include, by way of example, components, such as software components, object-oriented software components, class components, and task components, processes, functions, attributes, procedures, subroutines, segments of program code, drivers, firmware, microcode, circuitry, data, databases, data structures, tables, arrays, and variables. The functionality provided in the elements and "... units" may be combined into fewer elements and "... units" or further separated into additional elements and "... units". Further, the elements and "... units" may be implemented to operate one or more central processing units (CPUs) in a device or a secure multimedia card. Also, according to some embodiments, a "... unit" may include one or more processors.

The principles of embodiments will now be described and embodiments thereof will now be provided to clearly define the scope of claims of the present disclosure and for one of ordinary skill in the art to be able to perform the embodiments. The disclosed embodiments may be implemented in many different forms. The disclosed embodiments may each be solely implemented, or at least two or more of the embodiments may be combined and implemented.

Throughout the specification, it will also be understood that when an element is referred to as being "connected to" or "coupled with" another element, it can be directly connected to or coupled with the other element, or it can be electrically connected to or coupled with the other element by having an intervening element interposed therebetween. Also, when a part "includes" or "comprises" an element, unless there is a particular description contrary thereto, the part can further include other elements, not excluding the other elements.

It will be understood that, although the terms "first", "second", etc. may be used in the specification so as to describe various elements, these elements should not be limited by these terms. These terms may be used to distinguish one element from another element. For example, in the specification, a first key and a second key are mentioned, they are used to distinguish between different pieces of data, and thus, should not be limited by these terms.

Hardware secure architecture used in the disclosed embodiments indicates a hardware-based memory secure area in a central processing unit/graphics processing unit (CPU/GPU), which is encrypted to prevent data forgery/falsification from an external access. Data, a specific function, or entire application may be stored in the hardware secure architecture. For example, an application may be installed in the hardware secure architecture, and only a result value according to a requested operation may be transmitted to the outside of the hardware secure architecture. The hardware secure architecture may be commonly named and used as a reliability area, a trust zone, a secure zone, a secure memory, a trusted execution environment (TEE), software guard extensions (SGX), etc., and hereinafter, is referred to as a secure area.

Advantages and features of the present disclosure and methods of accomplishing the same may be understood more readily by reference to the following detailed descriptions of embodiments and accompanying drawings of the present disclosure. The present disclosure may, however, be embodied in many different forms and should not be construed as being limited to the embodiments set forth herein. Rather, these embodiments are provided so that the present disclosure will be thorough and complete and will fully convey the concept of the present disclosure to one of ordinary skill in the art, and the present disclosure will only be defined by the appended claims.

Hereinafter, terms identifying an access node, terms indicating network entities, terms indicating messages, terms indicating an interface between network entities, and terms indicating various pieces of identification information, as used in the following description, are exemplified for convenience of descriptions. Accordingly, the present disclosure is not limited to terms to be described below, and other terms indicating objects having equal technical meanings may be used.

Hereinafter, a base station (BS) is an entity that allocates resources to a user equipment (UE), and may be at least one of a Node B, a BS, an evolved node B (eNB / eNode B), a next-generation node B (gNB / gNode B), or xNode B (where, x indicates an alphabet letter including g or e), a radio access unit, a BS controller, a satellite, an airborne entity, or a node on a network. A terminal may include a UE, a mobile station (MS), a vehicle, a satellite, an airborne entity, a cellular phone, a smartphone, a computer, or a multimedia system enabled to perform a communication function. Also, embodiments of the present disclosure may be applied to other communication systems having similar technical backgrounds or channel types. Furthermore, the embodiments of the present disclosure may be applied to other communication systems through partial modification without greatly departing from the scope of the present disclosure based on determination by one of ordinary skill in the art.

Hereinafter, terms identifying an access node, terms indicating network entities, terms indicating network functions (NFs), terms indicating messages, terms indicating an interface between network entities, and terms indicating various pieces of identification information, as used in the following description, are exemplified for convenience of descriptions. Accordingly, the present disclosure is not limited to terms to be described below, and other terms indicating objects having equal technical meanings may be used.

Hereinafter, for convenience of descriptions, some terms and names defined in the 3^{rd} Generation Partnership Project Long Term Evolution (3GPP LTE) standard may be used. However, the present disclosure is not limited to these terms and names, and may be equally applied to systems conforming to other standards. The embodiments of the present disclosure may be supported by standard documents disclosed in at least one of IEEE 802, 3GPP, or 3GPP2 which are wireless access systems. That is, steps or parts which are not described in the embodiments of the present disclosure so as to clearly reveal the technical concept of the present disclosure may be supported by the documents.

A (radio) access network ((R)AN) is an entity that allocates resources to a UE, and may be at least one of an eNode B, a Node B, a BS, a NextGeneration Radio Access Network (NG-RAN), 5G-AN, a radio access unit, a BS controller, or a node on a network.

A wireless communication system defines a NextGen Core (NG Core) or a 5G Core Network (5GC) which is a new core network evolved from a 4G system to a 5G system. In the new core network, existing network entities (NEs) are all virtualized to form a network function (NF). According to an embodiment of the present disclosure, the NF may also indicate a NE, a network component, and a network resource.

According to an embodiment of the present disclosure, the NG core or the 5GC may include various NFs. The 5GC may include more or fewer NFs than the aforementioned NFs.

The 5G or the core network may consist of NFs including a user plane function (UPF), a session management function (SMF), an access and mobility management function (AMF), a 5G RAN, a security anchor function (SEAF), a subscription identifier de-concealing function (SIDF), an authentication server function (AUSF), user data management (UDM), a policy control function (PCF), etc.

For authentication of the entities, an entity such as an authentication server function (AUSF), authentication, authorization and accounting (AAA), etc. may be included. A UE (also referred to as terminal) may access the 5G core network via a BS (5G RAN).

The AMF may be a NF that manages mobility of a UE. For example, the AMF may manage UE registration to a control plane function of 5G (whether it is registered to a network), UE connectivity (whether it is connected to the network), UE mobility (where it is), etc. The SMF may be a NF that manages packet data network (PDN) connection provided to a UE. The PDN connection may also be referred to as a protocol data unit (PDU) session. The PCF may be a NF that applies a service policy, a charging policy, and PDU session policy of a mobile network operator with respect to a UE. The UDM may be a function that stores security related information such as a user security key, user subscription information, etc. The AUSF may perform UE authentication in a 3GPP access network and a non-3GPP access network. A data network (DN) may be a data network via which a user transmits or receives data to use a service of a network provider or a 3^{rd} party service. The SEAF may perform a role of a security anchor between a home network (HN) and a serving network (SN). The SIDF may obtain a subscription permanent identifier (SUPI) by decrypting an encrypted subscription concealed identifier (SUCI).

A mobile communication network according to an embodiment of the present disclosure may protect a user's privacy from an unauthorized 3^{rd} party. For example, there is a risk that an unauthorized 3^{rd} party such as a mobile network operator (MNO) may track a personal location of a UE user or may monitor (or wiretap) texts or calls. Accordingly, some embodiments of the present disclosure may be used to protect a privacy of a user such as a governmental institution, a company, an individual, etc. who uses a network.

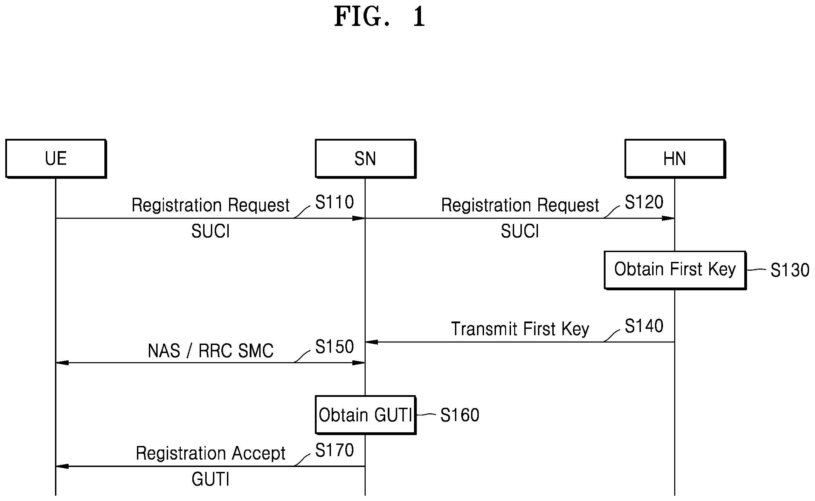

FIG. 1 is a diagram for describing a method of supporting protection of a user's privacy in a wireless communication system, according to an embodiment of the present disclosure.

In operation S110, a UE may transmit a registration request message including a SUCI to a first network, e.g., a SN.

The registration request message may include the SUCI, a 5G globally unique temporary identifier (5G-GUTI), an international mobile equipment identity (IMEI), etc. The SUCI may be obtained by encrypting a SUPI by using a public key of a second network, e.g., a HN.

In operation S120, the SN may transmit the registration request message including the SUCI to the HN. The HN may be understood as a network that performs authentication. The SN may determine or identify a transmission-target HN, based on a mobile country code (MCC) or a mobile network code (MNC).

In operation S130, the HN may obtain a first key (K_{AMF}), based on the SUCI. The first key may be expressed as K_{AMF}. The first key may be generated in the HN. The first key (K_{AMF}) may be obtained in a secure area of the HN, based on a second key, e.g., K_{SEAF} and SUPI. The SUPI may be obtained in the secure area, based on the SUCI. The K_{SEAF} may be generated based on a third key (K_{AUSF}) that is identified or determined in the secure area, based on the SUPI.

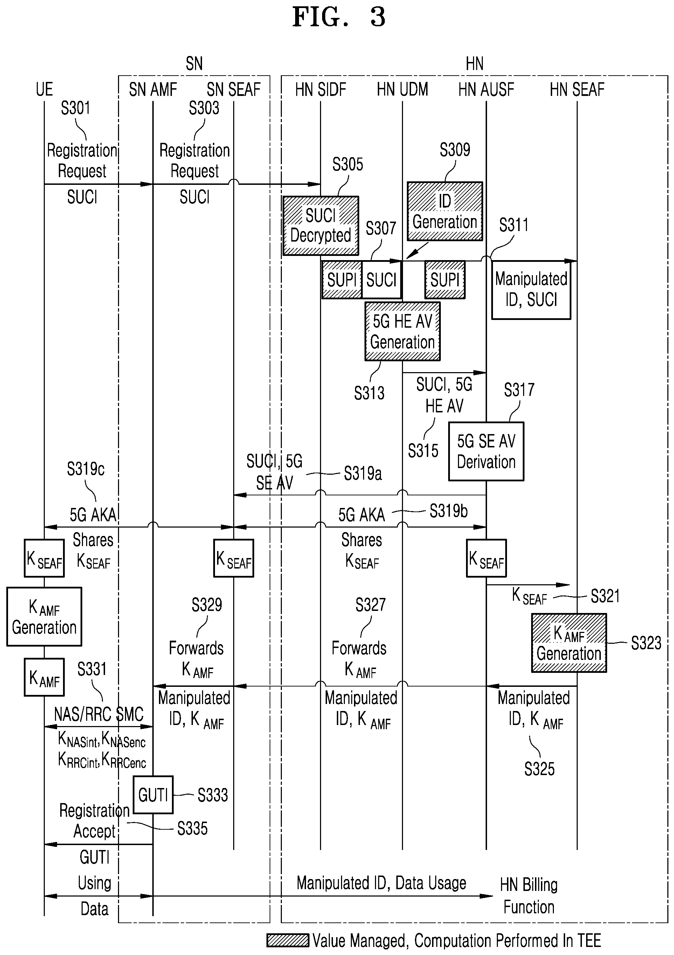

The HN may obtain a 5G home environment authentication vector (5G HE AV) in the secure area, based on the SUPI. An operation in which the HN obtains the 5G HE AV in the secure area may correspond to operation S313 to be described below with reference to FIG. 3. The HN may identify or determine a long-term key K corresponding to the SUPI, based on the SUPI received in the secure area. The HN may generate (or create) the 5G HE AV in the secure area, based on the long-term key K. The long-term key K may be expressed as an intermediate key, a third key, or K_{AUSF}. For example, the 5G HE AV may be generated (or created) based on random code (RAND), AUthentication TokeN (AUTN), eXpected RESponse (XRES*), and K_{AUSF}. K_{AUSF} may be generated via a cipher key (CK), an integrity key (IK), and a serving network name (SN Name), and XRES* may be generated via an expected response (XRES), a CK, an IK, a RAND, and an SN Name. CK, IK, and XRES may be generated via key K and RAND.

The HN may obtain a 5G serving environment authentication vector (5G SE AV), based on the 5G HE AV. An operation in which the HN obtains the 5G SE AV may correspond to operation S317 to be described below with reference to FIG. 3. The 5G SE AV may be generated (or created) based on a 5G authentication and key agreement (5G AKA) standard procedure.

Afterward, authentication may be performed between the UE, the SN, and the HN. For example, authentication may be performed between the UE, the SN SEAF, and HN AUSF. The authentication may be performed according to the 5G AKA standard procedure. When the authentication is successfully performed, the UE, the SN, and the HN may share an anchor key (second key, K_{SEAF}). For example, the HN may transmit the anchor key to the SN, and the SN may transmit the anchor key to the UE. An operation in which the authentication is performed between the UE, the SN, and the HN, and the anchor key is shared therebetween may correspond to operations S319a, S319b, and S319c to be described below with reference to FIG. 3.

In operation S140, the HN may transmit the obtained first key to the SN. The HN may transmit a Nausf_UEAuthentication_Authenticate Response message including the first key (K_{AMF}) to the SN. The HN may perform padding and then may transmit the first key (K_{AMF}).

In operation S150, the SN may perform at least one of a non-access stratum security mode command (NAS SMC) procedure or a radio resource control security mode command (RRC SMC) procedure with the UE. The SN may obtain at least one of a NAS key or an RRC key. For example, the NAS key may include K_{NASint}, K_{NASenc}, and the RRC key may include K_{RRCint}, K_{RRCenc}.

In operation S160, the SN may obtain or generate a GUTI. The GUTI may be allocated to the UE by an AMF, and may perform a role to identify a subscriber. The GUTI may include a globally unique AMF ID (GUAMI) and a 5G temporary mobile subscriber identity (5G-TMSI).

In operation S170, the SN may transmit a Registration Accept message including the GUTI to the UE.

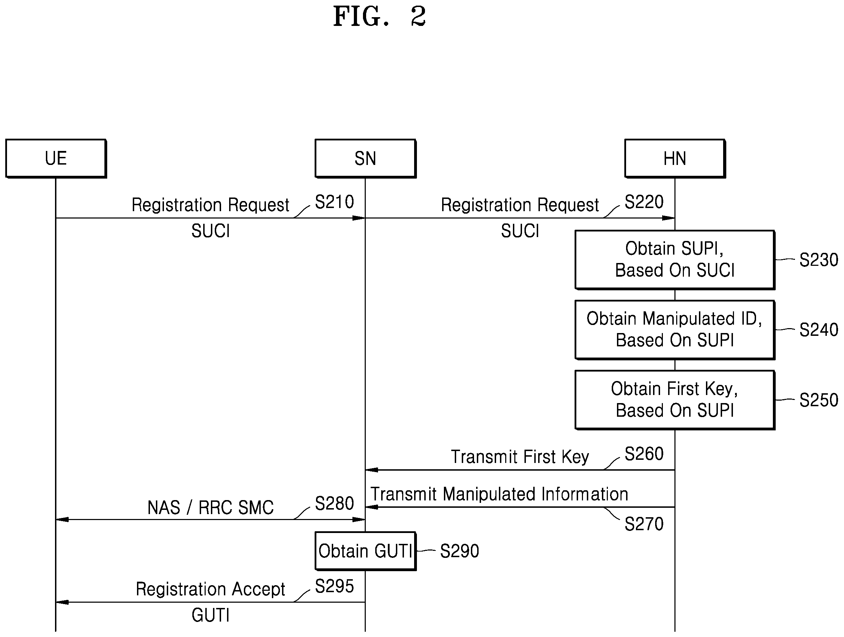

FIG. 2 is a diagram for describing a method of supporting protection of a user's privacy in a wireless communication system, according to an embodiment of the present disclosure.

In operation S210, a UE may transmit a registration request message including a SUCI to a first network, e.g., a SN. Operation S210 may correspond to aforementioned S110 of FIG. 1.

The registration request message may include the SUCI, a 5G-GUTI, an IMEI, etc. The SUCI may be obtained by encrypting a SUPI by using a public key of a second network, e.g., a HN.

In operation S220, the SN may transmit the registration request message including the SUCI to the HN. Operation S220 may correspond to aforementioned S120 of FIG. 1.

The HN may be understood as a network that performs authentication. The SN may determine or identify a transmission-target HN, based on a MCC or a MNC.

In operation S230, the HN may obtain the SUPI, based on the SUCI. The HN may obtain the SUPI by decrypting the SUCI in a secure area. A secret key of the HN which is used to decrypt the SUCI may correspond to the public key of the HN that the UE has. Operation S230 may correspond to aforementioned S130 of FIG. 1.

In operation S240, the HN may obtain manipulated information including an ID manipulated based on the SUPI. The HN may obtain the ID manipulated based on the SUPI. The manipulated ID may be expressed as various terms including a deception ID, a trick ID, an anonymous ID, a disguise ID, a virtual ID, a fake ID, a fraud ID, a pseudo ID, etc. The manipulated ID may be used not only in the inside of the secure area but also used in the outside and may be transmitted. The manipulated information may include information used to infer a user. The manipulated information may include information about current or past location of the user, service information used or being used by the user, or information about traffic of a call or a text of the user.

The manipulated ID may be generated by using at least one of a symmetric key algorithm or a public key algorithm. For example, the symmetric key algorithm may include at least one of advanced encryption standard (AES), an international data encryption algorithm (IDEA), or Rivest Cipher 6 (RC6), and the public key algorithm may include at least one of Rivest, Shamir and Adleman (RSA) or EIGamal. However, available algorithms are not limited to the aforementioned algorithms, and each algorithm may use a random number or a counter. A format of the manipulated ID may follow a format of the SUPI, but the present disclosure is not limited thereto. The HN may map at least one of an algorithm used to generate the manipulated ID, a key, and the manipulated ID to the SUPI, and may store it with the SUPI.

In operation S250, the HN may obtain a first key, based on the SUCI. Operation S250 may correspond to aforementioned S130 of FIG. 1.

The first key may be expressed as K_{AMF}. The first key may be generated in the HN. The first key (K_{AMF}) may be obtained in the secure area of the HN, based on a second key, e.g., K_{SEAF} and SUPI. The SUPI may be obtained in the secure area, based on the SUCI. The K_{SEAF} may be generated based on a third key (K_{AUSF}) that is identified or determined in the secure area, based on the SUPI. Referring to FIG. 2, operation S240 may be first performed, and then operation S250 may be performed. However, in an embodiment, operation S240 and operation S250 may be simultaneously performed, or operation S250 may be first performed and then operation S240 may be performed.

The HN may obtain a 5G HE AV in the secure area, based on the SUPI. An operation in which the HN obtains the 5G HE AV in the secure area may correspond to operation S313 to be described below with reference to FIG. 3. The HN may identify or determine a long-term key K corresponding to the SUPI, based on the SUPI received in the secure area. The HN may generate (or create) the 5G HE AV in the secure area, based on the long-term key K. The long-term key K may be expressed as an intermediate key, a third key, or K_{AUSF}. For example, the 5G HE AV may be generated (or created) based on RAND, AUTN, XRES*, and K_{AUSF}. K_{AUSF} may be generated via a CK, an IK, and a SN Name, and XRES* may be generated via an XRES, a CK, an IK, a RAND, and an SN Name. A CK, an IK, and an XRES may be generated via key K and RAND.

The HN may obtain a 5G SE AV, based on the 5G HE AV. An operation in which the HN obtains the 5G SE AV may correspond to operation S317 to be described below with reference to FIG. 3. The 5G SE AV may be generated (or created) based on a 5G AKA standard procedure.

Afterward, authentication may be performed between the UE, the SN, and the HN. For example, authentication may be performed between the UE, the SN SEAF, and HN AUSF. The authentication may be performed according to the 5G AKA standard procedure. When the authentication is successfully performed, the UE, the SN, and the HN may share an anchor key (second key, K_{SEAF}). For example, the HN may transmit the anchor key to the SN, and the SN may transmit the anchor key to the UE. An operation in which the authentication is performed between the UE, the SN, and the HN, and the anchor key is shared therebetween may correspond to operations S319a, S319b, and S319c to be described below with reference to FIG. 3.

In operation S260, the HN may transmit the obtained first key to the SN. Operation S260 may correspond to aforementioned S140 of FIG. 1.

In operation S270, the HN may transmit manipulated information including a manipulated ID to the SN. The manipulated information transmitted in operation S270 and the first key transmitted in operation S260 may be transmitted together in one operation, and the first key may be first transmitted and then the manipulated information may be transmitted, or the manipulated information may be first transmitted and then the first key may be transmitted. For example, the HN may transmit the manipulated information and the first key (K_{AMF}) to the SN. The HN may transmit a Nausf_UEAuthentication_Authenticate Response message including the manipulated information and K_{AMF} to the SN. The HN may perform padding and then may transmit the manipulated information and the first key (K_{AMF}).

In operation S280, the SN may perform at least one of a NAS SMC procedure or an RRC SMC procedure with the UE. The SN may obtain a NAS key and/or an RRC key. For example, the NAS key may include K_{NASint}, K_{NASenc}, and the RRC key may include K_{RRCint}, K_{RRCenc}. Operation S280 may correspond to aforementioned S150 of FIG. 1.

In operation S290, the SN may obtain or generate a GUTI. Operation S290 may correspond to aforementioned S160 of FIG. 1.

In operation S295, the SN may transmit a Registration Accept message including the GUTI to the UE. Operation S295 may correspond to aforementioned S170 of FIG. 1.

FIG. 3 is a diagram for describing a method of supporting protection of a user's privacy in a wireless communication system, according to an embodiment of the present disclosure.

In operation S301, a UE may transmit a registration request message including a SUCI to an AMF of an SN. Operation S301 may correspond to S110 of FIG. 1 or S210 of FIG. 2 which is described above.

The registration request message may include at least one of the SUCI, a 5G-GUTI, and an IMEI. The SUCI may be obtained by encrypting a SUPI by using a public key of an HN.

In operation S303, the SN AMF may transmit the registration request message including the SUCI to a subscription identifier de-concealing function (SIDF) of the HN. Operation S303 may correspond to S120 of FIG. 1 or S220 of FIG. 2 which is described above. The HN may be understood as a network that performs authentication. The SN may determine or identify a transmission-target HN, based on a MCC or a MNC.

In operation S305, the HN SIDF may obtain the SUPI in a secure area of the HN, based on the SUCI. Operation S305 may correspond to aforementioned S230 of FIG. 2. The HN SIDF may obtain the SUPI by decrypting the SUCI in the secure area. A secret key of the HN which is used to decrypt the SUCI may correspond to the public key of the HN that the UE has.

In operation S307, the HN SIDF may transmit the SUPI in the secure area to a HN UDM. The HN SIDF may transmit the SUCI to the HN UDM. The SUCI may be transmitted in the inside or the outside of the secure area.

In operation S309, the HN UDM may obtain, in the secure area, manipulated information including an ID manipulated based on the SUPI. Operation S309 may correspond to S240 of FIG. 2. The manipulated ID may be expressed as various terms including a trick ID, an anonymous ID, a disguise ID, a virtual ID, a fake ID, a fraud ID, a pseudo ID, etc. The manipulated information may include information usable to infer a user.

The manipulated ID may be generated by using at least one of a symmetric key algorithm or a public key encryption algorithm. For example, the symmetric key algorithm may include at least one of AES, an IDEA, or RC6, and the public key algorithm may include at least one of RSA or ElGamal. However, available algorithms are not limited to the aforementioned algorithms, and each algorithm may use a random number or a counter. A format of the manipulated ID may follow a format of the SUPI, but the present disclosure is not limited thereto.

The HN UDM may map at least one of an algorithm used to generate the manipulated ID, a key, and the manipulated ID to the SUPI, and may store it with the SUPI. The HN UDM may map at least one of an algorithm used to generate the manipulated ID, a key, and the manipulated ID to the SUPI, and may store it with the SUPI. The manipulated ID may be used not only in the inside of the secure area but also used in the outside and may be transmitted. The HN UDM may obtain the manipulated ID, based on the SUPI received in the secure area.

In operation S311, the HN UDM may transmit the SUPI to a HN SEAF by using the secure area. The HN UDM may transmit the manipulated ID or the SUCI to the HN SEAF. The manipulated ID or the SUCI may be transmitted to the HN SEAF from the HN UDM inside or outside the secure area.

In operation S313, the HN UDM may obtain a 5G HE AV in the secure area, based on the SUPI. The HN UDM may identify or determine a long-term key K corresponding to the SUPI, based on the SUPI received in the secure area. The long-term key K may be expressed as an intermediate key (K_{AUSF}). The HN UDM may generate (or create) the 5G HE AV in the secure area, based on the long-term key K. For example, the 5G HE AV may be generated (or created) based on RAND, AUTN, XRES*, and K_{AUSF}. K_{AUSF} may be generated via a CK, an IK, and a SN Name, and XRES* may be generated via an XRES, a CK, an IK, a RAND, and an SN Name. A CK, an IK, and a XRES may be generated via key K and RAND.

In operation S315, the HN UDM may transmit at least one of the 5G HE AV or the SUCI to the HN AUSF.

In operation S317, the HN AUSF may obtain a 5G SE AV, based on the 5G HE AV. The 5G SE AV may be obtained by removing K_{AUSF} from the 5G HE AV. The 5G SE AV may be generated (or created) based on a 5G AKA standard procedure. Authentication may be performed between the UE, an SN SEAF, and the HN AUSF. The authentication may be performed according to the 5G AKA standard procedure.

In operation S319a, operation S319b, and operation S319c, the SN SEAF and the HN AUSF may share an anchor key (K_{SEAF}). The HN AUSF may transmit the K_{SEAF} to the SN SEAF. The HN AUSF may transmit at least one of the SUCI or the 5G SE AV to the SN SEAF. The SN SEAF may transmit the K_{SEAF} to the UE.

In operation S321, the HN AUSF may transmit the K_{SEAF} to the HN SEAF.

In operation S323, the HN SEAF may obtain a first key (K_{AMF}) in the secure area, based on the K_{SEAF} and the SUPI. Operation S323 may correspond to S130 of FIG. 1 or S250 of FIG. 2.

In operation S325, the HN SEAF may transmit at least one of the first key or the manipulated information to the HN AUSF. The manipulated information and the first key may be transmitted together, or the first key may be transmitted and then the manipulated information may be transmitted, or the manipulated information may be transmitted and then the first key may be transmitted.

In operation S327, the HN AUSF may transmit the first key or the manipulated information to the SN SEAF. The manipulated information and the first key may be transmitted together, or the first key may be transmitted and then the manipulated information may be transmitted, or the manipulated information may be transmitted and then the first key may be transmitted. The HN AUSF may transmit a Nausf_UEAuthentication_Authenticate Response message including at least one of the manipulated information or K_{AMF} to the SN SEAF. Operation S327 may correspond to S140 of FIG. 1 or S260 and S270 of FIG. 2.

In operation S329, the SN SEAF may transmit the manipulated information or K_{AMF} to the SN AMF. The SN SEAF may not calculate the first key (K_{AMF}) and may transmit K_{AMF} to the SN AMF.

In operation S331, the SN AMF may perform at least one of a NAS SMC procedure or an RRC SMC procedure with the UE. The SN SEAF may obtain a NAS key and/or an RRC key. Operation S331 may correspond to S150 of FIG. 1 or S280 of FIG. 2.

In operation S333, the SN AMF may generate or obtain a GUTI. Operation S333 may correspond to S160 of FIG. 1 or S290 of FIG. 2.

In operation S335, the SN AMF may transmit a Registration Accept message including the GUTI to the UE. Operation S335 may correspond to S170 of FIG. 1 or S295 of FIG. 2.

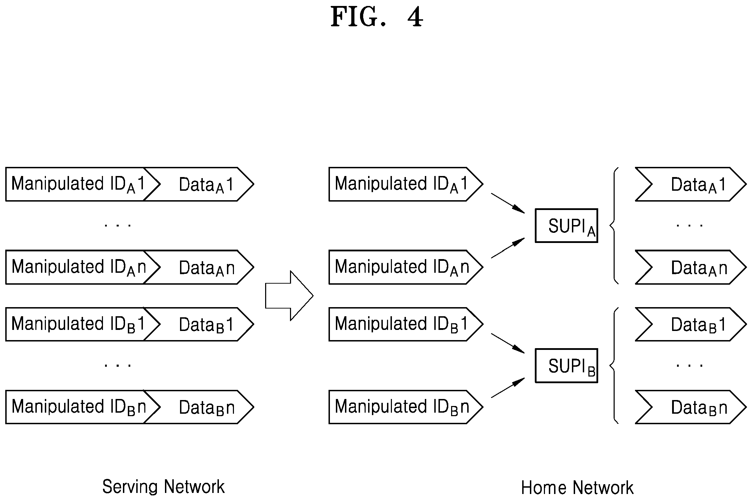

FIG. 4 is a diagram for describing an operation of obtaining information about an amount of data usage for each SUPI according to an embodiment of the present disclosure.

An SN may obtain at least one manipulated ID and data usage information mapped to the at least one manipulated ID. The SN may transmit manipulated ID and data usage information mapped to the manipulated ID to an HN. The SN may transmit the manipulated ID and the data usage information mapped to the manipulated ID to an HN billing function (or, an entity that performs a billing function). The HN billing function may indicate a UDM, an SMF, etc., which is an entity of the HN related to billing and charging. The HN billing function may transmit the manipulated ID and the data usage information mapped to the manipulated ID to the HN UDM. The HN UDM may obtain, in a secure area, information about an amount of data usage for each SUPI, based on the manipulated ID and the data usage information. The HN UDM may identify or calculate a SUPI, based on the manipulated ID, and may calculate an amount of data usage for each SUPI, based on data usage information and the SUPI. The HN UDM may transmit the amount of data usage for each SUPI to the HN billing function at every billing period. The HN billing function may calculate charges for each SUPI, based on the amount of data usage for each SUPI. An operation in which the HN billing function calculates charges for each SUPI, based on the amount of data usage for each SUPI, may be performed in the secure area.

For example, referring to FIG. 4, the SN may transmit manipulated ID A (Manipulated ID_{A} 3) and data usage information A (Data_{A} 3) mapped to the manipulated ID A to the HN. The HN may determine SUPI_{A}, based on the manipulated ID A (Manipulated ID_{A} 3). The HN may sum up an amount of data usage of SUPI_{A} and an amount of data usage corresponding to the data usage information A (Data_{A} 3). The HN may calculate the amount of data usage of SUPI_{A}, based on manipulated ID A (Manipulated ID_{A} 1, ... , Manipulated ID_{A} n) and data usage information A ID (Manipulated ID_{A} 1, ... , Manipulated ID_{A} n) mapped to the manipulated ID A. The HN UDM may transmit the calculated amount of data usage of SUPI_{A} to the HN billing function. The HN billing function may calculate charges of SUPI_{A}, based on the amount of data usage of SUPI_{A}.

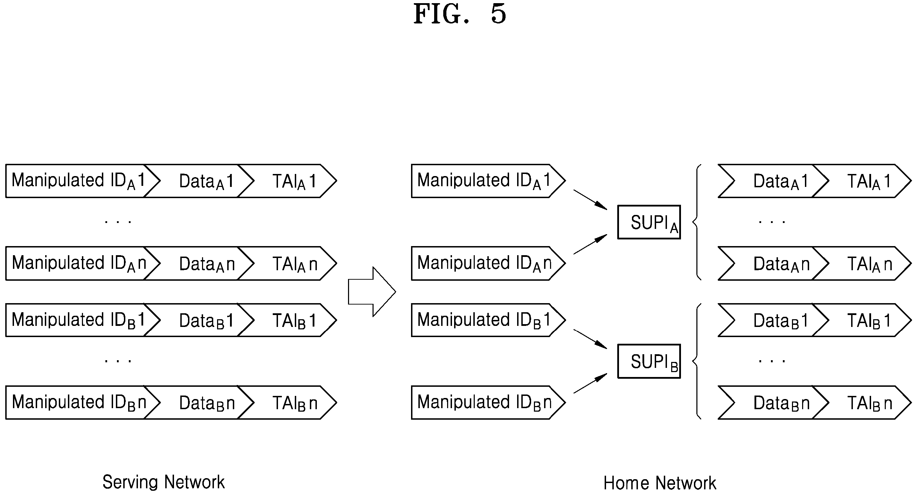

FIG. 5 is a diagram for describing an operation of obtaining location pattern information according to an embodiment of the present disclosure.

An SN may transmit a manipulated ID and location information of a UE mapped to the manipulated ID. The location information of the UE may be understood as a tracking area identity (TAI). A HN UDM may obtain, in a secure area, location record accumulation information for each SUPI, based on at least one manipulated ID and the location information. Location pattern information about one or more anonymous UEs, based on the location record accumulation information for each SUPI may be obtained. The HN UDM may transmit the location pattern information to the SN. The location pattern information may be obtained based on the location record accumulation information for each SUPI. The HN UDM may transmit the location pattern information to the SN at a certain period. The SN may transmit, to the HN, the manipulated ID with accumulation-target information, in addition to the location information. For example, service information used or being used by the user, or information about traffic of a call or a text of the user may be transmitted with the manipulated ID.

For example, referring to FIG. 5, the SN may transmit, to the HN, manipulated ID A (Manipulated ID_{A} 1) and location information A (TAI_{A} 1) mapped to the manipulated ID A. The HN may determine SUPI_{A}, based on the manipulated ID (Manipulated ID_{A} 1). The HN may obtain location record information of SUPI_{A}, based on SUPI_{A} and the location information (TAI_{A} 1) mapped to the manipulated ID. The HN may obtain location record accumulation information of SUPI_{A}, based on received manipulated ID A (Manipulated ID_{A} 1, ... , Manipulated ID_{A} n) and location information (TAI_{A} 1, ..., TAI_{A} n) mapped to the corresponding manipulated ID. The HN may obtain location record accumulation information of SUPI_{B}, based on received manipulated ID B (Manipulated ID_{B} 1, ... , Manipulated ID_{B} n) and location information (TAI_{B} 1, ..., TAI_{B} n) mapped to the corresponding manipulated ID. The HN may obtain location pattern information about an anonymous UE, based on the location record accumulation information of SUPI_{A} and the location record accumulation information of SUPI_{B}. The HN may transmit the location pattern information to the SN.

The present disclosure may protect at least one of information about current or past location of a user, service information used or being used by the user, or information about traffic of a call or a text of the user. According to an embodiment of the present disclosure, it may be difficult for a mobile network operator to identify an ID of a user or to specify a location of the user. Also, it may be difficult to specify a session of the user.

According to some embodiments of the present disclosure, a CN that performs authentication and a CN that provides a service may be separately provided. A user's privacy may be protected while minimizing a change in a base station and a core.

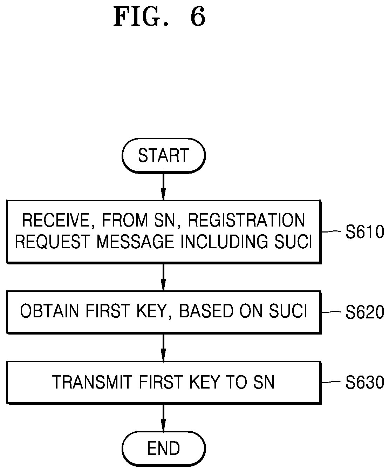

FIG. 6 is a flowchart of a method by which a HN supports protection of a user's privacy in a wireless communication system according to an embodiment of the present disclosure.

In operation S610, the HN receives, from an SN, a registration request message including a SUCI. Operation S610 may correspond to S120 of FIG. 1, S220 of FIG. 2, or 303 of FIG. 3.

In operation S620, the HN obtains a first key, based on the SUCI. Operation S620 may correspond to S130 of FIG. 1, S250 of FIG. 2, or 323 of FIG. 3. The obtaining of the first key may include: generating (or creating) a 5G HE AV in a secure area, based on a SUPI; obtaining a second key, based on the 5G HE AV and the SUCI; and obtaining the first key, based on the second key. This may correspond to S313, S315, S317, S321, and S323 of FIG. 3.

In operation S630, the HN transmits the first key to the SN. Operation S630 may correspond to S140 of FIG. 1, S260 and S270 of FIG. 2, or S327 of FIG. 3. An operating method of the HN may include transmitting manipulated information including a manipulated ID to the SN, and may correspond to S270 of FIG. 2. The manipulated ID may be obtained in a TEE of the HN based on the SUPI, and may correspond to S240 of FIG. 2. The SUPI may be obtained in the secure area based on the SUCI, and may correspond to S230 of FIG. 2.

The operating method of the HN may further include obtaining a 5G SE AV, based on the 5G HE AV; and transmitting the 5G SE AV to the SN. This may correspond to S317 and S319a-c of FIG. 3.

The operating method of the HN may further include: receiving, from the SN, at least one manipulated information and data usage information mapped to the at least one manipulated information; and obtaining, in the TEE, information about an amount of data usage for each SUPI, based on the at least one manipulated information and the data usage information. The corresponding operation may correspond to FIG. 4.

The operating method of the HN may further include: receiving, from the SN, at least one manipulated information and location information mapped to the at least one manipulated information; obtaining, in the TEE, location record accumulation information for each SUPI, based on the at least one manipulated information and the location information; obtaining location pattern information for one or more anonymous UEs, from the location record accumulation information for each SUPI; and transmitting, to the SN, the location pattern information. The corresponding operation may correspond to FIG. 5.

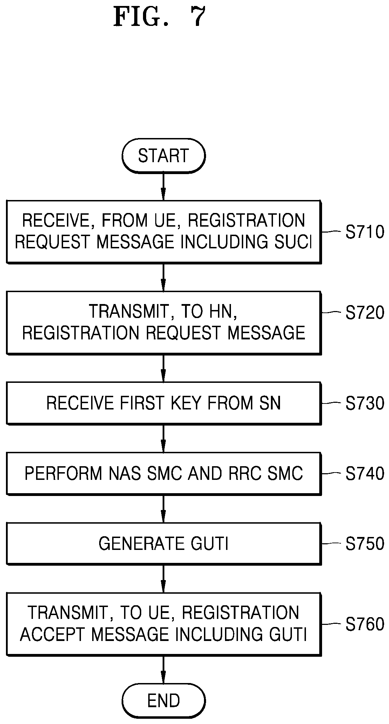

FIG. 7 is a flowchart of a method by which a SN supports protection of a user's privacy in a wireless communication system according to an embodiment of the present disclosure.

In operation S710, the SN receives, from a UE, a registration request message including a SUCI. Operation S710 may correspond to S110 of FIG. 1, S210 of FIG. 2, or S301 of FIG. 3.

In operation S720, the SN transmits the registration request message to an HN. Operation S720 may correspond to S120 of FIG. 1, S220 of FIG. 2, or 303 of FIG. 3.

In operation S730, a first key obtained based on the SUCI is received from the HN. Operation S730 may correspond to S140 of FIG. 1 or S260 of FIG. 2. The operating method of the SN may further include receiving, from the HN, manipulated information including a manipulated ID. This may correspond to S270 of FIG. 2 or S327 of FIG. 3.

In operation S740, a NAS SMC and an RRC SMC are performed. Operation S740 may correspond to S150 of FIG. 1, S280 of FIG. 2, or S331 of FIG. 3.

In operation S750, a global unique temporary identifier (GUTI) is generated. Operation S750 may correspond to S160 of FIG. 1, S290 of FIG. 2, or S333 of FIG. 3.

In operation S760, a registration accept message including the GUTI is transmitted to the UE. Operation S770 may correspond to S170 of FIG. 1, S295 of FIG. 2, or S335 of FIG. 3.

The operating method of the SN may further include receiving a 5G SE AV from the HN. This may correspond to S319a of FIG. 3. The operating method of the SN may further include transmitting, to the HN, at least one trick information and data usage information mapped to the least one trick information. The corresponding operation may correspond to FIG. 4. The operating method of the SN may further include: transmitting, to the HN, the at least one trick information and location information mapped to the least one trick information; and receiving, from the HN, location pattern information about one or more anonymous UEs. The corresponding operation may correspond to FIG. 5.

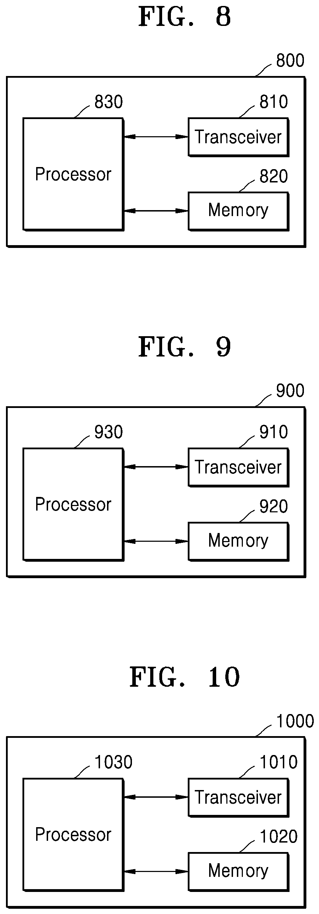

FIG. 8 is a diagram illustrating a configuration of a HN according to an embodiment of the present disclosure.

As shown in FIG. 8, the HN of the present disclosure may include a transceiver 810, a memory 820, and a processor 830. According to the operating method of the HN, the processor 830, the transceiver 810, and the memory 820, which are of the HN, may operate. However, elements of the HN are not limited to the example described above. The SN or the HN may include more elements than the aforementioned elements or may include fewer elements than the aforementioned elements. For example, the SN or the HN may include hardware security architecture. In addition, the processor 830, the transceiver 810, and the memory 820 may be implemented as one chip. The HN may include NFs such as the AMF, the SEAF, the SIDF, the UDM, the AUSF, and the like which are described above. Also, the HN may include a base station.

A receiver of the HN and a transmitter of the HN may be collectively referred to as the transceiver 810, and the transceiver 810 may transmit or receive a signal to or from a UE or other network entity. Here, the transmitted or received signal may include control information and data. To this end, the transceiver 810 may include a radio frequency (RF) transmitter for up-converting and amplifying a frequency of signals to be transmitted, and an RF receiver for low-noise-amplifying and down-converting a frequency of received signals. However, this is merely an example of the transceiver 810, and thus elements of the transceiver 810 are not limited to the RF transmitter and the RF receiver. The transceiver 810 may include a wired/wireless transceiver, and may include various configurations for transmitting and receiving signals. When the HN includes a secure area, the transceiver 810 may include a first transceiver of the secure area and a second transceiver of a rich execution environment (REE).

Also, the transceiver 810 may receive signals via communication channels (e.g., wireless channels) and output the signals to the processor 830, and may transmit signals output from the processor 830, via communication channels.

Also, the transceiver 810 may receive and output a communication signal to the processor, and may transmit a signal output from the processor to a UE or other network entity via wired/wireless networks.

The memory 820 may store programs and data necessary for operations of the HN. Also, the memory 820 may store control information or data which are included in a signal obtained by the HN. The memory 820 may be implemented as a storage medium including a read only memory (ROM), a random access memory (RAM), a hard disk, a compact disc (CD)-ROM, a digital versatile disc (DVD), or the like, or any combination thereof. When the HN includes the secure area, the memory 820 may include a first memory of the secure area and a second memory of the REE.

The processor 830 may control a series of processes to allow the HN to operate according to the aforementioned embodiments of the present disclosure. The processor 830 may include at least one processor. The methods according to the embodiments of the present disclosure as described herein or in the following claims may be implemented as hardware, software, or a combination of hardware and software. When the HN includes the secure area, the processor 830 may include a first processor of the secure area and a second processor of the REE.

When implemented as software, a computer-readable storage medium storing one or more programs (e.g., software modules) may be provided. The one or more programs stored in the computer-readable storage medium are configured for execution by one or more processors in an electronic device. The one or more programs include instructions directing the electronic device to execute the methods according to the embodiments of the present disclosure as described in the claims or the specification.

The programs (e.g., software modules or software) may be stored in non-volatile memory including a RAM or a flash memory, a ROM, electrically erasable programmable read only memory (EEPROM), a magnetic disc storage device, a CD-ROM, a DVD, another optical storage device, or a magnetic cassette. Alternatively, the programs may be stored in memory including a combination of some or all of the above-mentioned storage media. Also, a plurality of such memories may be included.

In addition, the programs may be stored in an attachable storage device accessible via any or a combination of communication networks such as Internet, an intranet, a local area network (LAN), a wide LAN (WLAN), a storage area network (SAN), or the like. Such a storage device may access, via an external port, a device performing the embodiments of the present disclosure. Furthermore, a separate storage device on the communication network may access the device performing the embodiments of the present disclosure.

FIG. 9 is a diagram illustrating a configuration of a network entity according to an embodiment of the present disclosure. The network entity may be the SN, or any one of a SIDF, a UDM, an AUSF, and a SEAF of the HN, or may be any one of a SEAF and an AMF of the SN.

As shown in FIG. 9, the network entity of the present disclosure may include a transceiver 910, a memory 920, and a processor 930. According to the operating method of the network entity, the processor 930, the transceiver 910, and the memory 920, which are of the network entity, may operate. However, elements of the network entity are not limited to the example described above. The SN or the HN may include more elements than the aforementioned elements or may include fewer elements than the aforementioned elements. For example, the SN or the HN may include hardware security architecture. In addition, the processor 930, the transceiver 910, and the memory 920 may be implemented as one chip. The network entity may include NFs such as the AMF, the SEAF, the SIDF, the UDM, the AUSF, and the like which are described above. Also, the network entity may include a base station.

A receiver of the network entity and a transmitter of the network entity may be collectively referred to as the transceiver 910, and the transceiver 910 may transmit or receive a signal to or from a UE or other network entity. Here, the transmitted or received signal may include control information and data. To this end, the transceiver 910 may include a RF transmitter for up-converting and amplifying a frequency of signals to be transmitted, and an RF receiver for low-noise-amplifying and down-converting a frequency of received signals. However, this is merely an example of the transceiver 910, and thus, elements of the transceiver 910 are not limited to the RF transmitter and the RF receiver. The transceiver 910 may include a wired/wireless transceiver, and may include various configurations for transmitting and receiving signals.

Also, the transceiver 910 may receive signals via communication channels (e.g., wireless channels) and output the signals to the processor 930, and may transmit signals output from the processor 930, via communication channels.

Also, the transceiver 910 may receive and output a communication signal to the processor, and may transmit a signal output from the processor to a UE or other network entity via wired/wireless networks.

The memory 920 may store programs and data necessary for operations of the SN. Also, the memory 920 may store control information or data which are included in a signal obtained by the SN. The memory 920 may be implemented as a storage medium including a ROM, a RAM, a hard disk, a CD-ROM, a DVD, or the like, or any combination thereof.

The processor 930 may control a series of processes to allow the SN to operate according to the aforementioned embodiments of the present disclosure. The processor 930 may include at least one processor. The methods according to the embodiments of the present disclosure as described herein or in the following claims may be implemented as hardware, software, or a combination of hardware and software.

When implemented as software, a computer-readable storage medium storing one or more programs (e.g., software modules) may be provided. The one or more programs stored in the computer-readable storage medium are configured for execution by one or more processors in an electronic device. The one or more programs include instructions directing the electronic device to execute the methods according to the embodiments of the present disclosure as described in the claims or the specification.

The programs (e.g., software modules or software) may be stored in non-volatile memory including a RAM or a flash memory, a ROM, an EEPROM, a magnetic disc storage device, a CD-ROM, a DVD, another optical storage device, or a magnetic cassette. Alternatively, the programs may be stored in memory including a combination of some or all of the above-mentioned storage media. Also, a plurality of such memories may be included.

In addition, the programs may be stored in an attachable storage device accessible via any or a combination of communication networks such as Internet, an intranet, a LAN, a WLAN, a SAN, or the like. Such a storage device may access, via an external port, a device performing the embodiments of the present disclosure. Furthermore, a separate storage device on the communication network may access the device performing the embodiments of the present disclosure.

FIG. 10 is a diagram illustrating a configuration of a UE according to an embodiment of the present disclosure.

As shown in FIG. 10, the UE of the present disclosure may include a transceiver 1010, a memory 1020, and a processor 1030. According to the communication method of the UE, the processor 1030, the transceiver 1010, and the memory 1020 of the UE may operate. However, elements of the UE are not limited to the example described above. For example, the UE may include more elements than the aforementioned elements or may include fewer elements than the aforementioned elements. In addition, the processor 1030, the transceiver 1010, and the memory 1020 may be implemented as one chip.

A receiver of the UE and a transmitter of the UE may be collectively referred to as the transceiver 1010, and the transceiver 1010 may transmit or receive a signal to or from a BS or a network entity. The signal transmitted to or received from the BS may include control information and data. To this end, the transceiver 1010 may include a RF transmitter for up-converting and amplifying a frequency of signals to be transmitted, and an RF receiver for low-noise-amplifying and down-converting a frequency of received signals. However, this is merely an example of the transceiver 1010, and thus, elements of the transceiver 1010 are not limited to the RF transmitter and the RF receiver.

Also, the transceiver 1010 may include a wired/wireless transceiver, and may include various configurations for transmitting and receiving signals.

Also, the transceiver 1010 may receive signals via wireless channels and output the signals to the processor 1030, and may transmit signals output from the processor 1030, via wireless channels.

Also, the transceiver 1010 may receive and output a communication signal to the processor, and may transmit a signal output from the processor to a network entity via wired/wireless networks.

The memory 1020 may store programs and data necessary for operations of the UE. Also, the memory 1020 may store control information or data which are included in a signal obtained by the UE. The memory 1020 may be implemented as a storage medium including a ROM, a RAM, a hard disk, a CD-ROM, a DVD, or the like, or any combination thereof.

The processor 1030 may control a series of processes to allow the UE to operate according to the aforementioned embodiments of the present disclosure. The processor 1030 may include at least one processor. For example, the processor 1030 may include a communication processor (CP) for performing control for communication, and an application processor (AP) for controlling a higher layer such as an application program, etc.

In the afore-described embodiments of the present disclosure, elements included in the present disclosure are expressed in a singular or plural form according to the embodiments of the present disclosure. However, the singular or plural form is appropriately selected for convenience of descriptions and the present disclosure is not limited thereto. As such, an element expressed in a plural form may also be configured as a single element, and an element expressed in a singular form may also be configured as plural elements.

Specific embodiments of the present disclosure are described in the descriptions of the present disclosure, but it will be understood that various modifications may be made without departing the scope of the present disclosure. Thus, the scope of the present disclosure is not limited to the embodiments described herein and should be defined by the appended claims and their equivalents.

## Claims

1. An operating method of a home network (HN) for supporting protection of a user's privacy in a wireless communication system, the operating method comprising:
receiving, from a serving network (SN), a registration request message comprising a subscription concealed identifier (SUCI), in response to a registration request of a user equipment (UE);
obtaining a first key, based on the SUCI; and
transmitting the first key to the SN.

2. The operating method of claim 1, further comprising transmitting, to the SN, manipulated information comprising a manipulated identifier (ID), and
wherein the manipulated ID is obtained in a trusted execution environment (TEE) of the HN, based on a subscription permanent identifier (SUPI), and
the SUPI is obtained in the TEE based on the SUCI.

3. The operating method of claim 2, wherein the obtaining of the first key comprises:
generating a 5^{th}-generation home environment authentication vector (5G HE AV) in the TEE based on the SUPI;
obtaining a second key, based on the 5G HE AV and the SUCI; and
obtaining the first key, based on the second key.

4. The operating method of claim 3, further comprising:
obtaining a 5G serving environment authentication vector (5G SE AV), based on the 5G HE AV; and
transmitting the 5G SE AV to the SN.

5. The operating method of claim 2, wherein
the manipulated ID is generated by using a symmetric key algorithm or a public key algorithm, based on the SUPI,
the symmetric key algorithm comprises at least one of advanced encryption standard (AES), an international data encryption algorithm (IDEA), or Rivest Cipher 6 (RC6), and
the public key algorithm comprises at least one of Rivest, Shamir and Adleman (RSA) or ElGamal.

6. The operating method of claim 2, further comprising:
receiving, from the SN, at least one manipulated information and data usage information mapped to the at least one manipulated information; and
obtaining, in the TEE, information about an amount of data usage for each SUPI, based on the at least one manipulated information and the data usage information.

7. The operating method of claim 2, further comprising:
receiving, from the SN, at least one manipulated information and location information mapped to the at least one manipulated information;
obtaining, in the TEE, location record accumulation information for each SUPI, based on the at least one manipulated information and the location information;
obtaining location pattern information for one or more anonymous UEs, from the location record accumulation information for each SUPI; and
transmitting, to the SN, the location pattern information.

8. An operating method of a serving network (SN) for supporting protection of a user's privacy in a wireless communication system, the operating method comprising:
receiving, from a user equipment (UE), a registration request message comprising a subscription concealed identifier (SUCI);
transmitting, to a home network (HN), the registration request message;
receiving, from the HN, a first key obtained based on the SUCI;
performing a non-access stratum security mode command (NAS SMC) procedure and a radio resource control security mode command (RRC SMC) procedure;
generating a global unique temporary identifier (GUTI); and
transmitting, to the UE, a registration accept message comprising the GUTI.

9. The operating method of claim 8, further comprising receiving, from the HN,
manipulated information comprising a manipulated identifier (ID), and
wherein the manipulated ID is obtained in a trusted execution environment (TEE) of the HN, based on a subscription permanent identifier (SUPI), and
the SUPI is obtained in the TEE based on the SUCI.

10. The operating method of claim 9, further comprising receiving, from the HN, a 5^{^{th}}-
generation serving environment authentication vector (5G SE AV),
wherein the 5G SE AV is obtained by the HN, based on a 5G home environment authentication vector (5G HE AV).

11. The operating method of claim 8, further comprising transmitting, to the HN, at least one manipulated information and data usage information mapped to the at least one manipulated information.

12. The operating method of claim 8, further comprising:
transmitting, to the HN, at least one manipulated information and location information mapped to the at least one manipulated information; and
receiving, from the HN, location pattern information for one or more anonymous UEs.

13. A home network (HN) for supporting protection of a user's privacy in a wireless communication system, the HN comprising:
a transceiver; and
at least one processor connected to the transceiver,
wherein the at least one processor is configured to:
receive, via the transceiver, from a serving network (SN), a registration request message comprising a subscription concealed identifier (SUCI), in response to a registration request of a user equipment (UE);
obtain a first key, based on the SUCI; and
transmit, via the transceiver, the first key to the SN.

14. The HN of claim 13, further comprising a trusted execution environment (TEE),
wherein the at least one processor is configured to transmit, via the transceiver, to the SN, manipulated information comprising a manipulated identifier (ID),
the manipulated ID is obtained in the TEE, based on a subscription permanent identifier (SUPI), and
the SUPI is obtained in the TEE based on the SUCI.

15. The HN of claim 14, wherein the at least one processor is further configured to:
generate a 5^{th}-generation home environment authentication vector (5G HE AV) in the TEE based on the SUPI;
obtain a second key, based on the 5G HE AV and the SUCI; and
obtain the first key, based on the second key.
